(19) Europäisches Patentamt / European Patent Office / Office européen des brevets

(11) **EP 4 054 161 A1**

(12) **EUROPEAN PATENT APPLICATION**
published in accordance with Art. 153(4) EPC

(43) Date of publication:
**07.09.2022 Bulletin 2022/36**

(21) Application number: **20881081.2**

(22) Date of filing: **27.10.2020**

(51) International Patent Classification (IPC):
**H04M 1/725** (2021.01)

(86) International application number:
**PCT/CN2020/123910**

(87) International publication number:
**WO 2021/083125 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2019 CN 201911053845**

(71) Applicant: **GUANGDONG OPPO MOBILE TELECOMMUNICATIONS CORP., LTD.**
**Dongguan, Guangdong 523860 (CN)**

(72) Inventor: **WANG, Duomin**
**Dongguan, Guangdong 523860 (CN)**

(74) Representative: **Taor, Simon Edward William**
**Venner Shipley LLP**
**200 Aldersgate**
**London EC1A 4HD (GB)**

(54) **CALL CONTROL METHOD AND RELATED PRODUCT**

(57) Provided are a call control method and related product. In the method, during a voice call between the first user of the first terminal and the second user of the second terminal, a three-dimensional face model of the second user is displayed; model-driven parameters are determined according to the call voice of the second user, where the model-driven parameters include expression parameters and posture parameters; the three-dimensional face model of the second user is driven according to the model-driven parameters to display a three-dimensional simulated call animation of the second user.

during a voice call between a first user of the first terminal and a second user of a second terminal, displaying a three-dimensional face model of the second user — 201

determining model driving parameters according to the call voice of the second user, wherein the model driving parameters include expression parameters and posture parameters — 202

driving the three-dimensional face model of the second user according to the model driving parameters to display a three-dimensional simulated call animation of the second user — 203

FIG. 2A

**Description**

**TECHNICAL FIELD**

This disclosure relates to the field of network and computer technology, and in particular, to a call control method and related products.

**BACKGROUND**

With the rapid development of information technology, smart terminals and smart systems are becoming more and more popular. It has brought many changes to people's lives and production methods. Users can make and receive phone calls, voice calls or video calls with other users thousands of miles away without leaving their homes.

**SUMMARY**

In a first aspect, embodiments of the present disclosure provide a call control method, which is applied to a first terminal. The method can include: during a voice call between the first user of the first terminal and the second user of the second terminal, displaying the three-dimensional face model of the second user; determining model-driven parameters according to the call voice of the second user, where the model-driven parameters include expression parameters and posture parameters; driving the three-dimensional face model of the second user according to the model-driven parameters to display a three-dimensional simulated call animation of the second user, the three-dimensional simulated call animation presenting expression animation information corresponding to the expression parameters, and the posture animation information corresponding to the posture parameter is presented.

In a second aspect, embodiments of the present disclosure provide a first terminal, including a processor and a memory. The memory can be used to store one or more programs and be configured to be executed by the processor. The memory can store instructions for performing a method, including as described in the first aspect, above.

In a third aspect, embodiments of the present disclosure provide a computer-program storage medium. The computer-program storage medium can include code stored thereon. The code, when executed by a processor, can cause the processor to execute a method, including the method as described above in the first aspect.

**BRIEF DESCRIPTION OF THE DRAWINGS**

The disclosure can be better understood from the following detailed description when read in conjunction with the accompanying drawings. It is emphasized that, according to common practice, various features of the drawings are not to-scale. To the contrary, the dimensions of the various features are arbitrarily expanded or reduced for clarity. The same reference numerals are used throughout the drawings to reference like components or features.

FIG. 1 is a schematic structural diagram of a call control system;
FIG. 2A is a schematic flowchart of a call control method;
FIG. 2B is a schematic diagram of a three-dimensional face display interface provided by an embodiment of the present application;
FIG. 2C is a schematic diagram of a general three-dimensional human face standard model;
FIG. 2D is a schematic diagram of a flow chart for calculating the Loss value based on the training data of the parameter extraction model;
FIG. 2E is a schematic diagram of a three-dimensional call selection interface;
FIG. 3 is a schematic flowchart of another call control method;
FIG. 4 is a schematic diagram of the functional unit structure of the call control device;
FIG. 5 is a schematic structural diagram of a first terminal.

**DETAILED DESCRIPTION**

In the following description, various embodiments will be described. For purposes of explanation, configurations and details are set forth in order to provide a thorough understanding of the embodiments. However, it will also be apparent to one skilled in the art that the embodiments may be practiced without the details. Furthermore, well-known features may be omitted or simplified in order not to obscure the embodiments described hereinafter.

At present, in terms of calls, when there is an incoming call, a general terminal can detect the incoming number information when the call comes in, or search for the picture of the number contact for display, etc., and can view the basic information of the incoming call, but cannot capture the other party's expression and posture and other information during the call.

According to embodiments of the present disclosure, a call control method is provided. The call control method may be implemented by a terminal. The detailed description is given below in conjunction with the drawings.

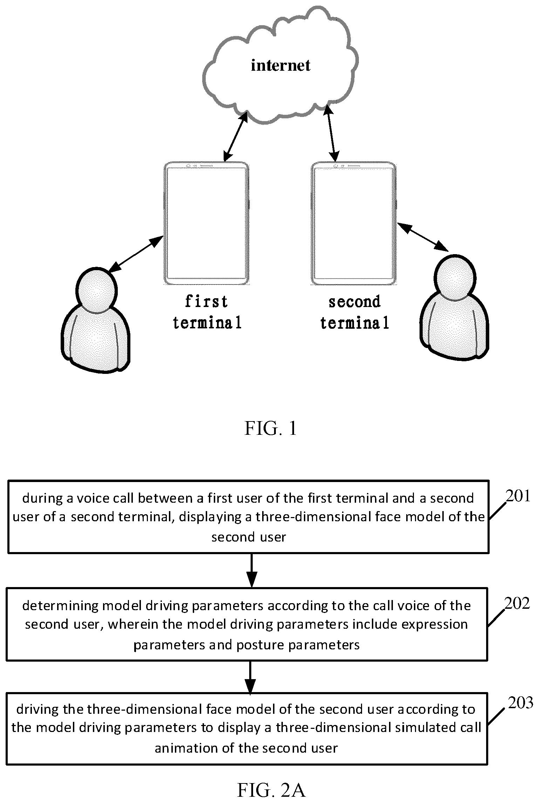

First, reference is made to the schematic structural diagram of a call control system shown in FIG. 1. As illustrated in FIG.1, the call control system includes an internet network, a first terminal, and a second terminal. A terminal may also be interchangeably referred to as a terminal device. In other possible embodiments, the call control system may also include a third terminal, a fourth terminal, or other devices. Multiple terminal devices are suitable for application scenarios of multi-party calls.

The aforementioned terminals include, but are not limited to, devices with communication functions, smart phones, tablet computers, notebook computers, desktop computers, portable digital players, smart bracelets, and smart watches.

The technical solutions of the embodiments of the present application may be implemented by the call control system of the architecture shown in FIG. 1 or its deformed architecture.

FIG. 2A is a schematic flowchart of a call control method provided by an embodiment of the present application. As shown in FIG. 2A, it includes the following steps.

In step 201, a three-dimensional face model of the second user is displayed during a voice call between a first user of the first terminal and a second user of a second terminal.

For example, during a user's call, whether it is an incoming call or an outgoing call, a terminal device of the user can display the other party's three-dimensional face model. And it is not only suitable for two-party calls, but also for multi-party calls. The terminal device of one party in the call can display the three-dimensional face models of the multiple other parties.

In step 202, model-driven parameters are determined according to the call voice of the second user. The model-driven parameters can include expression parameters and posture parameters.

For example, during a call, a terminal of one user may obtain the call voice of the peer user, and process it to generate model-driven parameters of the peer user, where the model-driven parameters include posture parameters and expression parameters. The model-driven parameter is the aforementioned three-dimensional face model of the second user.

In step 203, the three-dimensional face model of the second user is driven according to the model-driven parameters to display a three-dimensional simulated call animation of the second user. The three-dimensional simulated call animation can present expression animation information corresponding to the expression parameters, and the posture animation information corresponding to the posture parameter.

For example, it can be understood that the three-dimensional face model of the second user may dynamically change as the model-driven parameters change. Different parameters correspond to different expressions, such as smiling, laughing, angry, sad, angry, etc. And the second terminal generate different postures according to different posture parameters, so that the constantly changing three-dimensional face model of the second user presents the effect of three-dimensional animation.

It can be seen that, in an embodiment of the present application, when the first user of the first terminal is in a voice call with the second user of the second terminal, the first terminal can display the three-dimensional face model of the second user. According to the second user's call voice, the model-driven parameters of the above model can be determined. The three-dimensional face model of the second user can be driven according to the model-driven parameters to display a three-dimensional simulated call animation of the second user. Compared with the existing technology that can only display the identity information of a static calling user when making a call, the present application can more comprehensively present information of the calling party user, including facial expressions and head posture information, thereby helping to improve the intelligence and functionality of the call application of the first terminal.

In a possible embodiment, displaying the three-dimensional face model of the second user includes: displaying the three-dimensional face model of the second user on the call application interface of the first terminal.

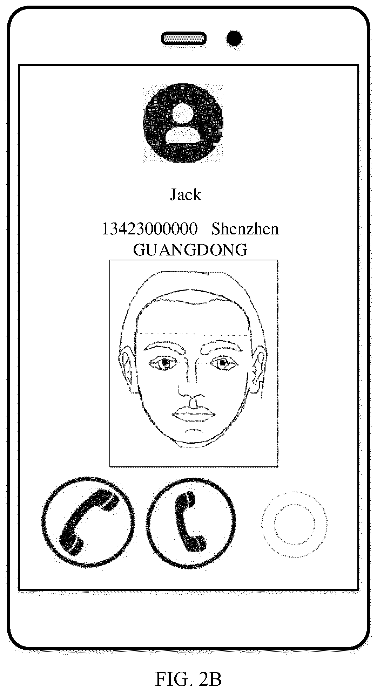

For example, as shown in FIG. 2B, the three-dimensional face model of the second user can be directly displayed in the call application interface of the first terminal, and the three-dimensional face model of the second user can be seen intuitively .

In a possible embodiment, displaying the three-dimensional face model of the second user includes: displaying the call application interface of the first terminal and the three-dimensional face model of the second user on a split-screen.

For example, when the first terminal is in the split-screen state, the call application interface of the first terminal and the three-dimensional face model of the second user may be separated on the split-screen interface at the same time; or,

The three-dimensional face model of the second user may be displayed on the call application interface of the first terminal, and other applications may be displayed on another interface of the split screen.

In a possible embodiment, displaying the three-dimensional face model of the second user includes: displaying the three-dimensional face model of the second user on a third terminal connected to the first terminal.

For example, the three-dimensional face model of the second user may be displayed on a third terminal connected to the first terminal, where a connection approach may be any one or more of wireless high-fidelity WiFi connection, Bluetooth connection, mobile data connection, and hot connection.

It can be seen that the diversified display modes of the three-dimensional face model of the second user not only increase the interest of the call process, but also display in a split screen or on a third terminal connected to the first terminal, which is more convenient for the terminal. In the use of the terminal by the user, at the same time, the display of the three-dimensional face model of the second user is performed through the display screen connected to the terminal, which can also improve the display effect. The connected terminal may include a third terminal, a fourth terminal, or a plurality of other terminals.

These terminals and the first terminal can be connected through any one or more of wireless high-fidelity WiFi connection, Bluetooth connection, mobile data connection, and hotspot connection.

In a possible embodiment, driving the three-dimensional face model of the second user based on the model-driven parameters to display the three-dimensional simulated call animation of the second user includes: detecting the call voice of the second user, and processing the call voice to obtain the spectrogram of the second user; and inputting the spectrogram of the second user into a driven parameter generation model to generate the model-driven parameters.

For example, during a voice call between the first user of the first terminal and the second user of the second terminal, the voice call of the second user of the second terminal can be obtained processed. Conversion into the spectrogram of the second user may include the following steps. For example, the length of the conversation voice of the second user is t, and t is divided into m frames, and the length of each frame is n=t/m, where t is a positive real number, and m is a positive integer. Fast Fourier transform may be performed on a speech signal of the conversation voice of the second user, and the speech signal is transformed from the time domain to the frequency domain such that a spectrogram of the second user can be obtained. The spectrogram of the second user may be input into a pre-trained driven parameter generation model to generate model-driven parameters. The model-driven parameters may include expression parameters and posture parameters. There are three posture parameters, which respectively represent scaling parameters, rotation matrix and translation matrix. Expression parameters, or posture parameters, or expression parameters and posture parameters, may be used to make the three-dimensional face model of the second user present an expression or posture changes, or changes in expression and posture.

It can be seen that using the call voice of the second user and the pre-trained driven parameter generation model to generate driven parameters and driving the second user's three-dimensional face model according to the driven parameters has good driving effect, and the operation is concise and clear.

In a possible embodiment, the process of obtaining training data of the driven parameter generation model includes the following steps:
collecting M pieces of audio, M is a positive integer, and obtaining M pieces of spectrogram according to the M pieces of audio, wherein each of the M pieces of audio is read from multiple text libraries in a preset manner; when collecting the M pieces of audio, collecting three-dimensional face data of each of the M collection objects according to a preset frequency to obtain M groups of three-dimensional face data; using the universal three-dimensional face standard model as a template, aligning the M groups of three-dimensional face data to obtain M sets of aligned three-dimensional face data, the M groups of aligned three-dimensional face data and the universal three-dimensional face standard model has the same vertices and topological structure; and performing time alignment calibration on the M pieces of audio and the M sets of aligned three-dimensional face data, so that each set of three-dimensional face data in the M sets of three-dimensional face data corresponds to the M pieces of audio in time series; wherein, the training data of the driven parameter generation model includes M sets of aligned three-dimensional face data and M spectrograms.

Take M=10 as an example, that is, there are 10 people as collection objects (M can also be 50, 30, and the number of people can be appropriately adjusted according to time and resource cost, but it may not be less than 10 people). The 10 collection objects can include people with different gender, age group, nationality, skin color, face shape, etc.

In some embodiments, a high-precision dynamic head and face scanning system can be used to collect the three-dimensional face data of the collection objects at a preset frequency, and the preset frequency may be 30 frames per second. In the process of collecting facial three-dimensional data, the collection objects may read aloud according to a predefined text sentence library. The text sentence library can include Chinese and English, and can also include other languages, such as Korean, Japanese, French, German, etc. At the same time, the recording device records the content read by the collection object. Three-dimensional data collection and audio recording are in a quiet environment to avoid introducing noise to the recording. The pre-defined text sentence database can be selected from 10 or more, and the length of each text sentence database can be 12000 characters/words. The collection of three-dimensional data for each of the 10 collection objects can be synchronized with the above-mentioned three-dimensional data collection process or simultaneously, recording the audio of all the text sentence libraries of each collection object. After the collection is completed, the 10 pieces of recorded audio are time-aligned with the 10 sets of three-dimensional face data.

Furthermore, the three-dimensional face scan data is smoothed and aligned with the template of the general three-dimensional face standard model. Then, the M spectrogram obtained by processing the M pieces of audio, according to the three-dimensional face data after the M spectrogram is aligned with the M groups, to obtain the model-driven parameter generation model.

It can be seen that the audio of multiple collection objects is collected and aligned with the three-dimensional scan data of the collection objects in time, so that the audio and the three-dimensional scan data completely correspond to each other, and a vocabulary and multilingual text sentence library is adopted to improve the accuracy of the training data for the driven parameter generation model and application scenarios.

In a possible embodiment, the process of training the driven parameter generation model includes the following steps:

inputting the M spectrograms into a driven parameter generation model to generate a first model-driven parameter set; fitting and optimizing the M groups of aligned three-dimensional face data with the general three-dimensional standard model of the face to generate a second model-driven parameter set; correlating the parameters in the first parameter set with the parameters in the second parameter set to form a one-to-one correspondence, and calculating a loss function to obtain a loss function value; when the loss function value is less than the preset first loss threshold, the training of the driven parameter generation model is completed.

For example, since the M spectrograms are in one-to-one correspondence with the M groups of aligned three-dimensional face data, the first parameter set generated after the M groups of spectrograms are input into the driven parameter generation model, e.g., a neural network for generating a first driven parameter set, and the second model-driven parameter set generated by fitting and optimizing the M groups of aligned three-dimensional face data with the general three-dimensional standard model of the face also have a one-to-one correspondence, where the former is predicted and generated by the driven neural network, and the latter is the true value annotation. The loss function is calculated based on the first driven parameter set and the second driven parameter set, such that the degree of convergence of the driven neural network is determined according to the value of the loss function. For example, the preset loss function threshold is 5, 10, 7, etc. The loss function threshold can be set according to the accuracy requirements of different levels of the driven neural network.

The driven parameter generation model may be any one of convolutional neural networks.

The loss function is calculated based on the first driven parameter set and the second driven parameter set, such that the degree of convergence of the driven neural network is determined according to the value of the loss function, thereby improving the model training effect, where the first driven parameter set is predicted and generated by the driven neural network, and the second model-driven parameter set is generated by fitting and optimizing the M groups of aligned three-dimensional face data with the general three-dimensional standard model of the face.

In a possible embodiment, before displaying the three-dimensional face model of the second user in association with the voice call between the first user of the first terminal and the second user of the second terminal, the method can also include: obtaining a face image of the second user; inputting the face image of the second user into a pre-trained parameter extraction model to obtain the identity parameters of the second user; inputting the identity parameters of the second user into a general three-dimensional face standard model to obtain a three-dimensional face model of the second user; storing the three-dimensional face model of the second user.

For example, the pre-trained parameter extraction model can also be one of many neural networks. The model has the function of generating parameters corresponding to the input face image based on the input face image. Such as identity parameters, expression parameters, posture parameters, etc. Therefore, by inputting the face image containing the second user into the pre-trained parameter extraction model, the identity parameters of the second user can be obtained.

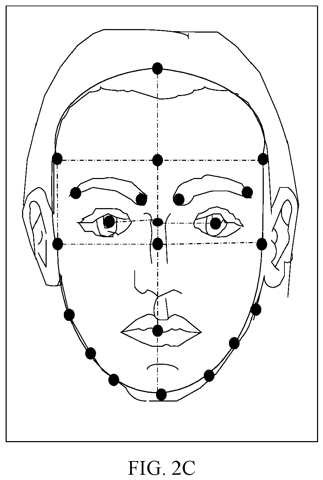

As shown in FIG. 2C, the general three-dimensional face standard model is a three-dimensional face model in a natural expression state obtained from multiple three-dimensional face models, which may include N key point annotations, and N may be 106 , 100, 105 (only the key points are marked symbolically in the figure), N is a positive integer. Inputting the identity parameters of the second user into a general three-dimensional face standard model to obtain the three-dimensional face model of the second user. In one example, the equation can be expressed as follows:

$$S = \bar{S} + \sum_{i=1}^{m} (\alpha_i S_i + \beta_i B_i)$$

$$V = f * pr * \prod * S + t$$

where, $\bar{S}$ is average face, $S_i$ represents the orthogonal basis of the ith face identity, $B_i$ represents the orthogonal basis of the ith face expression, $\alpha_i$ represents the ith face identity parameter, and $\beta_i$ represents the ith face expression parameter. $f$, $pr$, and $t$ are the face pose parameters, respectively representing the scaling parameters, the rotation matrix and the translation matrix, and II is the projection matrix. The three-dimensional face model of the second user can be generated by inputting the identity parameters of the second user into the general three-dimensional face standard model, performing parameter fitting, and acting with the identity orthogonal basis.

The three-dimensional face model of the second user can be associated with other information of the second user for storage. When other information of the second user is input, the three-dimensional face model of the second user can be obtained. Alternatively, the three-dimensional face model of the second user can also be stored separately, and the three-dimensional face model of the second user can be obtained when the instruction for obtaining the three-dimensional face model of the second user is input. The other information of the second user may include any one or more of remarks, name, phone number, identification number, nickname, picture, and social account.

The first terminal may alternatively obtain the face image of the second user, or pre-store the face image of the second user, and then use the face image of the second user to generate a three-dimensional face model of the second user, and store the three-dimensional face model of the second user.

It can be seen that storing the three-dimensional face model of the second user in the first terminal in advance can simplify the process and simplify the technical operation when the three-dimensional face model of the second user is driven.

In a possible embodiment, the process of collecting training data of the parameter extraction model includes the following steps. X face region images are obtained, X is a positive integer, and each face region image of the X face region images are labeled with N key points to obtain X face region images marked with N key point, N is a positive integer,. The X face region images with N key points are input into the primary parameter extraction model to generate X sets of parameters. The X sets of parameters are input into the general three-dimensional face standard model, and X three-dimensional face standard models are generated. N key point projections are performed on the X three-dimensional face standard models to obtain X face region images projected by N key points. Y groups of three-dimensional face scan data are collected, Y is a positive integer. The Y groups of three-dimensional face scan data are smoothed. Using the general three-dimensional face model as a template, the Y group of three-dimensional face scan data are aligned. The Y group of three-dimensional face scan data are fit and optimized with the general three-dimensional standard model of the face to obtain the Y group of general three-dimensional face standard model parameters. The parameters can include one of the identity parameters, expression parameters, and posture parameter. The Y group of three-dimensional face scan data corresponds to Y collection objects, and the face images of each of the Y collection objects are collected to obtain Y face images. N key point annotations are performed on the Y face images to obtain Y face images marked with N key points. The training data of the parameter extraction model can include: the X face region images labeled with N key points, X face region images projected by N key points, Y sets of general three-dimensional face standard model parameters, one or more Y sheets of the face image and Y face images marked with N key points.

For example, the X face region images may be about 1 million collected face image data sets that are uniformly distributed in various poses, include comprehensive races, comprehensive and uniformly distributed age groups, balanced gender ratios, and cover a wide range of face shapes. After collecting these face images, the face detection algorithm can be used to detect the face of the 1 million face images, and the face area can be obtained and cut. The N-point face key point annotation algorithm can then be used to perform key point detection in the face area, and obtain face image data with N key point annotations after trimming.

In addition, a high-precision dynamic head and face scanning system can be used to collect Y groups of three-dimensional scan data, such as Y=30000. The group of three-dimensional face scan data can be smoothed, and aligned with the template of the general three-dimensional face model to generate the same topology three-dimensional face data with vertex semantics. These aligned three-dimensional face data can then be used to perform fitting and optimization with the general three-dimensional face standard model, and iterate step by step to obtain the Y group of general three-dimensional face standard model parameters. Each vertex of the three-dimensional face model corresponds to a different coordinate and number, for example, 55 corresponds to the right eye corner, and 65 corresponds to the left eye corner.

In addition, when collecting Y groups of three-dimensional face scan data, the face images of the Y collection objects can be collected to obtain Y face images. For example, Y=30000 and N=106, and then N key point annotations are performed on the 30,000 face images to obtain 30,000 face images with 106 key point annotations.

Thus, X face images (two-dimensional) plus ternary data (Y face images, N key points, Y groups of general three-dimensional face standard model parameters) constitute the training of the parameter extraction model.

It can be seen that, compared with three-dimensional data, two-dimensional images are easier to obtain, thus reducing the difficulty and training cost of training. Therefore, embodiments of the present application use a combination of face images (two-dimensional) and three-dimensional scan data to train the parameter extraction model, thereby making training data easier to obtain, and adding a lot of training data. While the training efficiency is improved, the accuracy of the training can also be improved.

In a possible embodiment, the training process of the parameter extraction model includes the following steps: inputting the training data of the parameter extraction model into the parameter extraction model; calculating the loss value between the data, and complete the training of the parameter extraction model when the loss value between the data is less than the second loss threshold process.

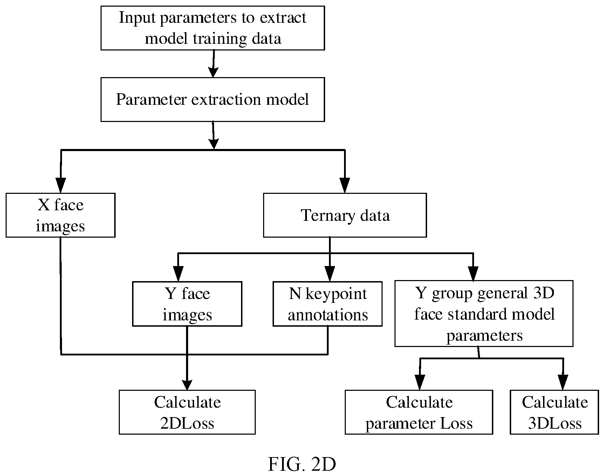

As shown in FIG. 2D, the training data of the parameter extraction model is input into the parameter extraction model, the loss value between the parameters is calculated, the three-dimensional loss value is calculated, and the 2D loss value is calculated.

The loss value between the parameters is the loss value between the parameters of the Y group of general three-dimensional face standard model parameters. The calculation of the three-dimensional loss value includes generation of a three-dimensional face model according to the parameters of the general three-dimensional face standard model and labeling the model with N key points to calculate the loss value between the key points. The calculation of the 2D loss value includes inputting the face image into parameter extraction model to obtain the corresponding parameters, and inputting the parameters into the general three-dimensional face standard model to obtain a three-dimensional face model, and performing 2D projection of the 3D face model with N key point annotations to obtain the face area image projected by N key points, and calculating the error value between the face area image with N key points marked and the face area image with N key points projected to obtain the 2D loss value. The face region images labeled with N key points include both X face region images with N key points and Y face images with N key points. The face area image projected with N key points includes both X face area images projected by N key points, and also includes Y pieces of face region images projected by N key points obtained according to the face images marked with Y pieces of N key points.

When the final loss value obtained according to the loss value between the parameters, the 2D loss value, and the three-dimensional loss value is less than the second loss threshold, the training of the parameter extraction model is completed.

It can be seen that calculating the loss value between the data through multiple sets of data, and using the loss value to determine the convergence of the parameter extraction model training, can effectively improve the training effect of the model.

In a possible embodiment, before displaying the three-dimensional face model of the second user, the method further includes one of the following: detecting the screen status of the first terminal is on, and storing with the first terminal a three-dimensional face model of the second user;

detecting the screen status of the first terminal is on, storing with the first terminal the three-dimensional face model of the second user, displaying the three-dimensional call mode selection interface, and detecting that the user selects the three-dimensional call mode start command is entered in the interface; and when it is detected that the distance between the first terminal and the first user is greater than a preset distance threshold, and the first terminal stores a three-dimensional face model of the second user, a three-dimensional call mode selection interface is displayed; a three-dimensional call mode start instruction entered by the user through the three-dimensional call mode selection interface is detected.

For example, it may be that when the first terminal is in a bright-screen or on state, and the first terminal stores a three-dimensional face model of the second user, then the first user and the second user of the first terminal. During the voice call of the second user of the terminal, the three-dimensional face model of the second user can be automatically displayed.

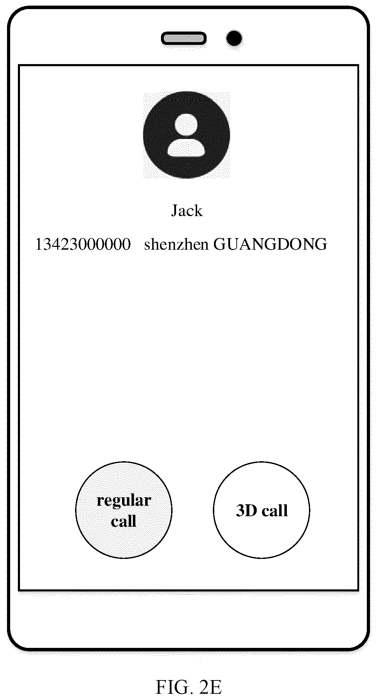

It may also be that when the terminal is in a bright screen or on state, or the distance sensor detects that the distance between the first terminal and the first user is greater than a preset distance threshold, as shown in FIG. 2E, a three-dimensional call mode selection is displayed, and after detecting the three-dimensional call mode activation instruction entered in the three-dimensional call mode selection interface, as shown in FIG. 2B, the three-dimensional face model of the second user is displayed. The distance between the first terminal and the first user may be the distance between the first terminal and the first user's ear, also can be the distance between the first terminal and other parts of the body of the first user.

It can be seen that multiple trigger conditions or methods for the second user's three-dimensional face model make the terminal function more convenient.

In a possible embodiment, after the three-dimensional face model of the second user is driven according to the model-driven parameters, the method further includes: if a three-dimensional call mode exit instruction is detected, terminating displaying the three-dimensional face model of the second user and/or terminating determining the model-driven parameters based on the call voice of the second user. If it is detected that the distance between the first terminal and the first user is less than the distance threshold, the determination of model-driven parameters can be terminated based on the call voice of the second user.

It can be seen that when the three-dimensional call mode exit instruction is detected, the display of the three-dimensional face model of the second user is terminated, and/or the determination of model-driven parameters based on the call voice of the second user is terminated, which can reduce unnecessary resources consumption, operation is more efficient.

In step 301, during a voice call between a first user of the first terminal and a second user of the second terminal, a three-dimensional face model of the second user is displayed. The step 301 can correspond to step 201, discussed above, and therefore will not be repeated here.

In step 302, the call voice of the second user can be detected, and the call voice can be processed to obtain a spectrogram of the second user.

For example, during a voice call between the first user of the first terminal and the second user of the second terminal, the voice call of the second user of the second terminal can be obtained. The voice of the call can be processed, and the conversion into the spectrogram of the second user may include the following steps. For example, the length of the conversation voice of the second user is t, and it is divided into m frames, and the length of each frame is n=t/m. Fast Fourier transform is performed on it, and the speech signal is transformed from the time domain to the frequency domain to obtain the spectrogram of the second user.

In step 303, the spectrogram of the second user can be input into a driven parameter generation model to generate model-driven parameters, where the driven parameters include expression parameters and posture parameters.

For example, the driven parameter generation model is a pre-trained neural network. The spectrogram of the second user may be input into the model-driven parameter generation model to generate the model-driven parameters. The model-driven parameters include expression parameters, and/or posture parameters. There are three posture parameters, which respectively represent the zoom scale parameter, the rotation matrix and the translation matrix.

In step 304, the three-dimensional face model of the second user is driven according to the model-driven parameter to display a three-dimensional simulated call animation of the second user. The three-dimensional simulated call animation can present an expression animation corresponding to the expression parameter information, and posture animation information can be presented corresponding to the posture parameters.

For example, the model-driven parameters may be in multiple groups, and different groups correspond to different types of expressions or postures. Further, the model-driven parameters may be input into the three-dimensional face model of the second user, so that as the model-driven parameters change, different expressions or postures are presented, thereby presenting an animation effect.

The three-dimensional face model of the second user is driven according to the model-driven parameters, so as to display a three-dimensional simulated call animation of the second user, including: inputting the model-driven parameters into the three-dimensional face model of the second user, and driving the three-dimensional face model of the second user to perform dynamic changes, where the dynamic changes include changes in expressions and/or changes in posture.

It can be seen that the corresponding spectrogram is generated according to the call voice of the second user, and the spectrogram is input into the pre-trained neural network to obtain model-driven parameters, and then the model-driven parameters are used to drive the three-dimensional face model of the second user. In this way, different postures and expressions can be presented according to different model-driven parameters, thereby realizing an animation effect. The operation is convenient, and the obtained model drive parameters are highly accurate.

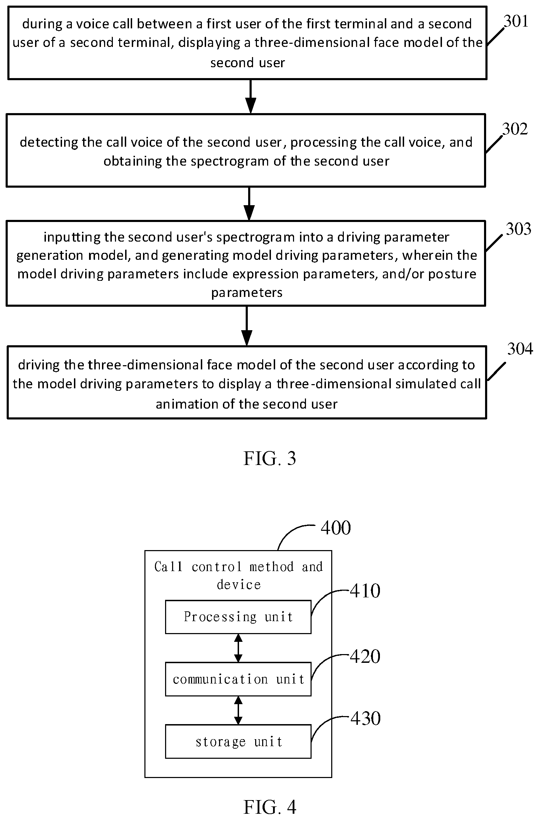

Consistent with the embodiments shown in Figures 2A and 3 above, please refer to Figure 4. Figure 4 is a schematic diagram of the functional unit structure of a call control device 400 provided by an embodiment of the present application, which is applied to the first terminal. The device includes a processing unit and a communication unit. As shown in the figure, the call control device 400 includes: a processing unit 410 and a communication unit 420.

The processing unit 410 can be configured to display a three-dimensional face model of the second user during a voice call between the first user of the first terminal and the second user of the second terminal through the communication unit 420. The processing unit can also be configured to determine model-driven parameters according to the call voice of the second user. The model-driven parameters can include expression parameters and posture parameters. A three-dimensional face model can drive the second user according to the model-driven parameters to a three-dimensional simulated call animation of the second user. The three-dimensional simulated call animation presents expression animation information corresponding to the expression parameters, and presents posture animation information corresponding to the posture parameters.

In a possible embodiment, in the aspect of displaying the three-dimensional face model of the second user, the processing unit 410 is configured to display the second user's three-dimensional face model in the call application interface of the first terminal.

In a possible embodiment, in the aspect of displaying the three-dimensional face model of the second user, the processing unit 410 is configured to display the call application interface of the first terminal and the second user's three-dimensional face mode in a split screen.

In a possible embodiment, in the aspect of displaying the three-dimensional face model of the second user, the processing unit 410 is configured to display the second user's three-dimensional face mode on a third terminal connected to the first terminal.

In a possible embodiment, in the aspect of driving the three-dimensional face model of the second user according to the model-driven parameters to display the three-dimensional simulated call animation of the second user, the processing unit 410 is used to detect the voice of the second user, process the voice of the call, and obtain a spectrogram of the second user, input the second user's spectrogram into a driven parameter generation model to generate model-driven parameters, wherein the model-driven parameters include expression parameters, and/or posture parameters.

In a possible embodiment, in terms of the process of obtaining training data of the driven parameter generation model, the processing unit 410 is configured to collect M pieces of audio, and obtain M spectrograms based on the M pieces of audio. The M pieces of audio are each of the M collection objects reading the recorded audio of multiple text libraries in a preset manner. When the M pieces of audio are collected, each of the M collection objects is collected at a preset frequency. The three-dimensional face data of the object are collected to obtain M sets of three-dimensional face data; use the general three-dimensional face standard model as a template to align the M sets of three-dimensional face data to obtain M sets of aligned three-dimensional face data. The aligned three-dimensional face data of the M groups can have the same vertices and topological structure as the general three-dimensional standard model of the face. Time alignment calibration can be performed on the M pieces of audio and the aligned three-dimensional face data of the M groups, so that each group of three-dimensional face data in the M groups of three-dimensional face data corresponds to each piece of audio in the M pieces of audio one-to-one in a time series. Training of the driven parameter generation model includes three-dimensional face data in which the M spectrograms are aligned with the M groups.

In a possible embodiment, in terms of the training process of the driven parameter generation model, the processing unit 410 is configured to input the M spectrograms into the driven neural network model to generate a first model-driven parameter. The aligned three-dimensional face data of the M groups is fit and optimized with the general three-dimensional standard model of the face to generate a second model-driven parameter se. The parameters in the first parameter set are combined with the second parameter set. The parameters can be one-to-one, and the loss function can be calculated to obtain a loss function value. When the loss function value is less than the preset first loss threshold, the driven parameter generation model is trained to completion.

In a possible embodiment, the face image of the second user can be obtained before the processing unit 410 displays the three-dimensional face model of the second user during a voice call between the first user of the first terminal and the second user of the second terminal. The face image of the second user can be input the face image of the second user into a pre-trained parameter extraction model to obtain the identity parameters of the second user. The parameters are input to a general three-dimensional face standard model to obtain the three-dimensional face model of the second user; and the three-dimensional face model of the second user is stored.

In a possible embodiment, in terms of the training data collection process of the parameter extraction model, the processing unit 410 is configured to collect X face region images, and perform a calculation of each of the X face region images. The face region image is labeled with N key points to obtain X face region images labeled with N key points; the X face region images labeled with N key points are input into the primary parameter extraction model to generate X sets of parameters, input the X sets of parameters into the general three-dimensional face standard model to generate X three-dimensional face standard models, and perform N key point projections on the X three-dimensional face standard models to obtain X face region images projected by N key points; collecting Y group of three-dimensional face scan data, blurring the Y group of three-dimensional face scan data, using the general three-dimensional face model as a template, aligning the Y group of three-dimensional face scan data, fitting and optimizing the aligned three-dimensional face scan data of the Y group and the general three-dimensional face model to obtain the parameters of the Y-group general three-dimensional face standard model, the parameters include any one or more of the identity parameters, expression parameters, and posture parameters. The Y group of three-dimensional face scan data corresponds to Y collection objects, and the face images of each collection object in the Y collection objects are collected to obtain Y face images. N key point annotations are performed on the Y face images to obtain Y face images annotated with N key points. The training data of the parameter extraction model includes: the X face area image annotated with N key points, X face area images projected by N key points, Y group of general three-dimensional face standard model parameters, Y face images, and any one or more of Y face images marked with N key points.

In a possible embodiment, in terms of the training process of the parameter extraction model, the processing unit 410 is configured to input the training data of the parameter extraction model into the parameter extraction model, and calculate the loss value between each data. When the loss value between the various data is less than the second loss threshold, the training process of the parameter extraction model is completed.

In a possible embodiment, before the display of the three-dimensional face model of the second user, the processing unit 410 is further configured to perform detecting the screen status of the first terminal is on, and storing with the first terminal a three-dimensional face model of the second user; detecting the screen status of the first terminal is on, storing with the first terminal the three-dimensional face model of the second user, displaying the three-dimensional call mode selection interface, and detecting that the user selects the three-dimensional call mode start command is entered in the interface, and when it is detected that the distance between the first terminal and the first user is greater than a preset distance threshold, and the first terminal stores a three-dimensional face model of the second user, a three-dimensional call mode selection interface is displayed; a three-dimensional call mode start instruction entered by the user through the three-dimensional call mode selection interface is detected.

Wherein, the call control device 400 may further include a storage unit 430 for storing program codes and data of electronic equipment. The processing unit 410 may be a processor, the communication unit 420 may be a transceiver, and the storage unit 430 may be a memory.

It is understandable that since the method embodiment and the device embodiment are different presentation forms of the same technical concept, the content of the method embodiment part of this application should be synchronized to the device embodiment part, and will not be repeated here.

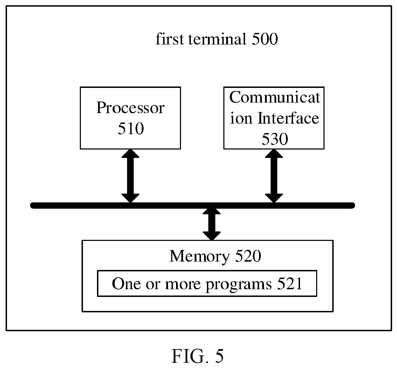

FIG. 5 is a schematic structural diagram of a first terminal 500 provided by an embodiment of the present application. As shown in the figure, the first terminal 500 includes an application processor 510, a memory 520, a communication interface 530, and one or more programs 521, where: The one or more programs 521 are stored in the aforementioned memory 520 and are configured to be executed by the aforementioned application processor 510, and the one or more programs 521 include instructions for executing the following steps: during a voice call between the first user of the first terminal and the second user of the second terminal, the three-dimensional face model of the second user is displayed; model-driven parameters are determined according to the call voice of the second user, where the model-driven parameters include expression parameters and posture parameters; the three-dimensional face model of the second user is driven according to the model-driven parameters to display a three-dimensional simulated call animation of the second user, the three-dimensional simulated call animation presenting expression animation information corresponding to the expression parameters, and the posture animation information corresponding to the posture parameter is presented.

It can be seen that during a call between two or more end users, one end user can display the three-dimensional face model of other multi-party users, and the terminal corresponding to one end user can generate a model based on the voice of other multi-party terminal users. The driven parameters are used to drive the three-dimensional face models of other multi-party terminal users to display the three-dimensional simulation call animation of the other multi-party terminal users, which improves the visualization and functionality of the call process. It is convenient for one terminal user to capture the changes in expressions and postures of other multi-party terminal users in real time during a call.

In a possible embodiment, in the aspect of displaying the three-dimensional face model of the second user, the one or more programs 521 include instructions for performing the following operations: The interface displays the three-dimensional face model of the second user.

In a possible embodiment, when the three-dimensional face model of the second user is displayed, the one or more programs 521 include instructions for splitting a display screen of the call application interface of the first terminal and a three-dimensional face model of the second user.

In a possible embodiment, when the three-dimensional face model of the second user is displayed, the one or more programs 521 include instructions for the three-dimensional face model of the second user to be displayed on the top when the third terminal is connected to the first terminal.

In a possible embodiment, the three-dimensional face model of the second user is driven according to the model-driven parameters to display the three-dimensional simulated call animation of the second user, and the one or more programs 521 include instructions for performing the following steps: detecting the voice of the second user, processing the voice of the second user, and obtaining the spectrogram of the second user; inputting the spectrogram of the second user to drive parameter generation. The model generates model-driven parameters, and the model-driven parameters include expression parameters and posture parameters.

In a possible embodiment, in terms of the process of obtaining the training data of the driven parameter generation model, the one or more programs 521 include instructions for performing the following steps. M pieces of audio are collected, according to the M pieces of audio to obtain M spectrograms. The M audio is that each of the M collection objects reads the recording audio of multiple text libraries in a preset manner. When the M audios are collected, all the audios are collected according to the preset frequency. The three-dimensional face data of each of the M collection objects are obtained to obtain M groups of three-dimensional face data. Using the general three-dimensional face standard model as a template, the M groups of three-dimensional face data are aligned to obtain M groups of alignment. After the three-dimensional face data, the aligned three-dimensional face data of the M groups have the same vertices and topological structure as the general three-dimensional standard model of the face. After aligning the M pieces of audio with the M groups, the three-dimensional face data is aligned and calibrated in time, so that each set of three-dimensional face data in the M sets of three-dimensional face data corresponds to each corresponding piece of audio in the M pieces of audio in a one-to-one correspondence in a time sequence. The training data of the driven parameter generation model includes three-dimensional face data in which M spectrograms are aligned with the M groups.

In a possible embodiment, in terms of the training process of the driven parameter generation model, the one or more programs 521 include instructions for performing the following steps. The M spectrograms are input into the driven neural network model. A first model drive parameter set is generated. The aligned three-dimensional face data of the M groups is fit and optimized with the general three-dimensional standard model of a face. A second model drive parameter set is generated. The first parameter set is combined. The parameters are in one-to-one correspondence with the parameters in the second parameter set, and the loss function is calculated to obtain the loss function value. When the loss function value is less than the preset first loss threshold, the training completes the driven parameter generation model.

In a possible embodiment, before the three-dimensional face model of the second user is displayed during the voice call between the first user of the first terminal and the second user of the second terminal, the one or multiple programs 521 include instructions for performing the following steps. The face image of the second user is obtained. The face image of the second user is input into a pre-trained parameter extraction model to obtain the second user's identity parameters. The identity parameters of the second user are input into a general three-dimensional face standard model to obtain the three-dimensional face model of the second user. The three-dimensional face model of the second user is stored.

In a possible embodiment, the process of collecting training data of the parameter extraction model includes the following steps. X face region images are obtained, and each face region image of the X face region images are labeled with N key points to obtain X face region images marked with N key points. The X face region images with N key points are input into the primary parameter extraction model to generate X sets of parameters. The X sets of parameters are input into the general three-dimensional face standard model, and X three-dimensional face standard models are generated. N key point projections are on the X three-dimensional face standard models are performed to obtain X face region images projected by N key points. Y group of three-dimensional face scan data are collected. The Y group of three-dimensional face scan data are smoothed. Using the general three-dimensional face model as a template, the Y group of three-dimensional face scan data are aligned. The Y group of three-dimensional face scan data are fit and optimized with the general three-dimensional standard model of the face to obtain the Y group of general three-dimensional face standard model parameters. The parameters can include one of the identity parameters, expression parameters, and posture parameter. The Y group of three-dimensional face scan data corresponds to Y collection objects, and the face images of each of the Y collection objects are collected to obtain Y face images. N key point annotations are performed on the Y face images to obtain Y face images marked with N key points. The training data of the parameter extraction model can include: the X face region images labeled with N key points, X face region images projected by N key points, Y sets of general three-dimensional face standard model parameters, one or more Y sheets of the face image and Y face images marked with N key points. In a possible embodiment, in terms of the training data collection process of the parameter extraction model, the one or more programs 521 include instructions for performing the following steps: X face region images are obtained, and each face region image of the X face region images are labeled with N key points to obtain X face region images marked with N key points. The X face region images with N key points are input into the primary parameter extraction model to generate X sets of parameters. The X sets of parameters are input into the general three-dimensional face standard model, and X three-dimensional face standard models are generated. N key point projections are on the X three-dimensional face standard models are performed to obtain X face region images projected by N key points. Y group of three-dimensional face scan data are collected. The Y group of three-dimensional face scan data are smoothed. Using the general three-dimensional face model as a template, the Y group of three-dimensional face scan data are aligned. The Y group of three-dimensional face scan data are fit and optimized with the general three-dimensional standard model of the face to obtain the Y group of general three-dimensional face standard model parameters. The parameters can include one of the identity parameters, expression parameters, and posture parameter. The Y group of three-dimensional face scan data corresponds to Y collection objects, and the face images of each of the Y collection objects are collected to obtain Y face images. N key point annotations are performed on the Y face images to obtain Y face images marked with N key points. The training data of the parameter extraction model can include: the X face region images labeled with N key points, X face region images projected by N key points, Y sets of general three-dimensional face standard model parameters, one or more Y sheets of the face image and Y face images marked with N key points.

In a possible embodiment, in terms of the training process of the parameter extraction model, the one or more programs 521 include instructions for executing the following steps. Training data of the parameter extraction model is input into the parameter extraction model. The loss value between the various data is calculated. When the loss value between the various data is less than the second loss threshold, the training process of the parameter extraction model is complete.

In a possible embodiment, before the display of the three-dimensional face model of the second user, the one or more programs 521 include instructions for executing the following steps: detecting the screen status of the first terminal is on, and storing with the first terminal a three-dimensional face model of the second user; detecting the screen status of the first terminal is on, storing with the first terminal the three-dimensional face model of the second user, displaying the three-dimensional call mode selection interface, and detecting that the user selects the three-dimensional call mode start command is entered in the interface and when it is detected that the distance between the first terminal and the first user is greater than a preset distance threshold, and the first terminal stores a three-dimensional face model of the second user, a three-dimensional call mode selection interface is displayed; a three-dimensional call mode start instruction entered by the user through the three-dimensional call mode selection interface is detected.

The processor 510 may include one or more processing cores, such as a 4-core processor, an 8-core processor, and so on. The processor 510 may adopt at least one hardware form of DSP (Digital Signal Processing), FPGA (Field-Programmable Gate Array), and PLA (Programmable Logic Array, Programmable Logic Array). The processor 510 may also include a main processor and a coprocessor. The main processor is a processor used to process data in the awake state, also called a CPU (Central Processing Unit, central processing unit); the coprocessor is a low-power processor used to process data in the standby state. In some embodiments, the processor may be integrated with a GPU (Graphics Processing Unit, image processor), and the GPU is used to render and draw content that needs to be displayed on the display screen. In some embodiments, the processor 510 may further include an AI (Artificial Intelligence) processor, and the AI processor is used to process computing operations related to machine learning.

The memory 520 may include one or more computer-readable storage media, which may be non-transitory. The memory 520 may also include a high-speed random access memory and a non-volatile memory, such as one or more magnetic disk storage devices and flash memory storage devices. In this embodiment, the memory 520 is at least used to store the following computer program, where the computer program is loaded and executed by the processor 510 to implement relevant steps in the call control method disclosed in any of the foregoing embodiments. In addition, the resources stored in the memory 520 may also include an operating system and data, etc., and the storage mode may be short-term storage or permanent storage. For example, the operating system may include Windows, Unix, Linux, etc. The data may include, but is not limited to, terminal interaction data, terminal device signals, and so on.

In some embodiments, the first terminal 500 may further include an input/output interface, a communication interface, a power supply, and a communication bus.

Those skilled in the art can understand that the structure disclosed in this embodiment does not constitute a limitation on the first terminal 500, and may include more or less components.

The foregoing mainly introduces the solution of embodiments of the present application from the perspective of the execution process on the method side. It can be understood that, in order to implement the above-mentioned functions, the first terminal includes hardware structures and/or software modules corresponding to each function. Those skilled in the art should easily realize that in combination with the units and algorithm steps of the examples described in the embodiments provided herein, the present application can be implemented in the form of hardware or a combination of hardware and computer software. Whether a certain function is executed by hardware or computer software-driven hardware depends on the specific application and design constraint conditions of the technical solution. Professionals and technicians can use different methods for each specific application to implement the described functions, but such implementation should not be considered beyond the scope of this application.

According to embodiments of the present application the first terminal can be divided into functional units according to the foregoing method examples. For example, each functional unit may be divided corresponding to each function, or two or more functions may be integrated into one processing unit. The above-mentioned integrated unit can be implemented in the form of hardware or software functional unit. It should be noted that the division of units in the embodiments of the present application is illustrative, and is only a logical function division, and there may be other division methods in actual implementation.

An embodiment of the present application also provides a computer storage medium, wherein the computer storage medium stores a computer program for electronic data exchange, and the computer program enables a computer to execute part or all of the steps of any method as recorded in the above method embodiment, the above-mentioned computer includes a first terminal.

Embodiments of the present application also provide a computer program product. The above-mentioned computer program product includes a non-transitory computer-readable storage medium storing a computer program. The above-mentioned computer program is operable to cause a computer to execute any of the methods described in the above-mentioned method embodiments. Part or all of the steps of the method. The computer program product may be a software installation package, and the computer includes the first terminal.

It should be noted that for the foregoing method embodiments, for the sake of simple description, they are all expressed as a series of action combinations, but those skilled in the art should know that this application is not limited by the described sequence of actions. Because according to this application, some steps can be performed in other order or at the same time. Secondly, those skilled in the art should also know that the embodiments described in the specification are all preferred embodiments, and the actions and modules involved are not necessarily required by this application.

In the above-mentioned embodiments, the description of each embodiment has its own focus. For parts that are not described in detail in an embodiment, reference may be made to related descriptions of other embodiments.

In the several embodiments provided in this application, it should be understood that the disclosed device may be implemented in other ways. For example, the terminal embodiments described above are only illustrative. For example, the division of the above-mentioned units is only a logical function division, and there may be other divisions in actual implementation, for example, multiple units or components can be combined or integrated. To another system, or some features can be ignored, or not implemented. In addition, the displayed or discussed mutual coupling or direct coupling or communication connection may be indirect coupling or communication connection through some interfaces, devices or units, and may be in electrical or other forms.

The units described above as separate components may or may not be physically separate, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present application may be integrated into one processing unit, or each unit may exist alone physically, or two or more units may be integrated into one unit. The above-mentioned integrated unit can be implemented in the form of hardware or software functional unit.

If the above integrated unit is implemented in the form of a software functional unit and sold or used as an independent product, it can be stored in a computer readable memory. Based on this understanding, the technical solution of the present application essentially or the part that contributes to the existing technology or all or part of the technical solution can be embodied in the form of a software product, and the computer software product is stored in a memory. A number of instructions are included to enable a computer device (which may be a personal computer, a server, or a network device, etc.) to execute all or part of the steps of the foregoing methods of the various embodiments of the present application. The aforementioned memory includes: U disk, Read-Only Memory (ROM, Read-Only Memory), Random Access Memory (RAM, Random Access Memory), mobile hard disk, magnetic disk or optical disk and other media that can store program codes.

Those of ordinary skill in the art can understand that all or part of the steps in the various methods of the above-mentioned embodiments can be completed by a program instructing relevant hardware. The program can be stored in a computer-readable memory, and the memory can include: a flash disk, Read-only memory (English: Read-Only Memory, abbreviation: ROM), random access device (English: Random Access Memory, abbreviation: RAM), magnetic disk or optical disk, etc.

The above-disclosed are only part of the embodiments of this application. Of course, it cannot be used to limit the scope of rights of this application. Those of ordinary skill in the art can understand all or part of the procedures for implementing the above-mentioned embodiments and make them in accordance with the claims of this application. The equivalent change is still within the scope of this application.

**Claims**

1. A method for call control, implemented by a first terminal, the method comprising:

   in association with a voice call between a first user of the first terminal and a second user of a second terminal, displaying a three-dimensional face model of the second user;
   determining model-driven parameters based on a call voice of the second user, wherein the model-driven parameters include expression parameters and posture parameters; and
   driving the three-dimensional face model of the second user based on the model-driven parameters to display a three-dimensional simulated call animation of the second user, wherein the three-dimensional simulated call animation presents expression animation information corresponding to the expression parameters, and posture animation information corresponding to the posture parameters.

2. The method of claim 1, wherein displaying the three-dimensional face model of the second user comprises:
   displaying the three-dimensional face model of the second user on a call application interface of the first terminal.

3. The method of claim 1, wherein displaying the three-dimensional face model of the second user comprises:
   displaying a call application interface of the first terminal and the three-dimensional face model of the second user on a split-screen.

4. The method of claim 1, wherein displaying the three-dimensional face model of the second user comprises:
   displaying the three-dimensional face model of the second user on a third terminal connected to the first terminal.

5. The method of any of claims 1-4, wherein determining model-driven parameters according to the call voice of the second user comprises:

   detecting the call voice of the second user, and processing the call voice to obtain a spectrogram of the second user; and
   inputting the spectrogram of the second user into a driven parameter generation model to generate the model-driven parameters.

6. The method of claim 5, further comprising: obtaining training data of the driven parameter generation model by:

   collecting M pieces of audio, and obtaining M spectrograms according to the M pieces of audio, wherein each of the M pieces of audio is read from multiple text libraries in a preset manner, M is a positive integer;
   collecting three-dimensional face data of each of M collection objects according to a preset frequency to obtain M groups of three-dimensional face data;
   using a three-dimensional face standard model as a template to align the M groups of three-dimensional face data to obtain M sets of aligned three-dimensional face data, the M groups of aligned three-dimensional face data and the three-dimensional face standard model having same vertices and a same topological structure; and

performing time alignment calibration on the M pieces of audio and the M sets of aligned three-dimensional face data, wherein, after the time alignment calibration, each set of three-dimensional face data in the M sets of three-dimensional face data corresponds to the M pieces of audio in a time series,

wherein training data of the driven parameter generation model includes the M sets of aligned three-dimensional face data and the M spectrograms.

7. The method of claim 6, further comprising: training the driven parameter generation model with the training data, wherein training the driven parameter generation model with the training data includes:

inputting the M spectrograms into a driven parameter generation model to generate a first model-driven parameter set;

fitting and optimizing the M sets of aligned three-dimensional face data with the three-dimensional face standard model to generate a second model-driven parameter set;

correlating the parameters in the first parameter set with the parameters in the second parameter set to form a correspondence; and

calculating a loss function to obtain a loss function value,

wherein when the loss function value is less than a preset first loss threshold, the training of the driven parameter generation model is completed.

8. The method of any of claims 1-7, wherein the display of the second user is during a voice call between the first user of the first terminal and the second user of the second terminal;

wherein before the three-dimensional face model of the second user is displayed, the method further comprises:

obtaining a face image of the second user;

inputting the face image of the second user into a pre-trained parameter extraction model to obtain identity parameters of the second user;

inputting the identity parameters of the second user into a three-dimensional face standard model to obtain a three-dimensional face model of the second user;

storing the three-dimensional face model of the second user.

9. The method of claim 8, further comprising collecting training data for the parameter extraction model, including:

obtaining X face region images, and labeling each face region image of the X face region images with N key points to obtain X face region images marked with N key points, X, N is positive integer;

inputting the X face region images marked with N key points into a primary parameter extraction model to generate X sets of parameters, inputting the X sets of parameters into the three-dimensional face standard model, and generating X three-dimensional face standard models, performing N key point projections on the X three-dimensional face standard models to obtain X face region images projected by N key points;

collecting Y groups of three-dimensional face scan data, smoothing the Y groups of three-dimensional face scan data, use the three-dimensional face standard model as a template, align the Y groups of three-dimensional face scan data, fitting and optimizing the Y groups of three-dimensional face scan data with the general three-dimensional standard model of the face to obtain the Y groups of general three-dimensional face standard model parameters, the parameters include one of the identity parameters, expression parameters, and posture parameters, the Y groups of three-dimensional face scan data corresponds to Y collection objects, and collecting the face images of each of the Y collection objects to obtain Y face images;

performing N key point annotations on the Y face images to obtain Y face images marked with N key points;

wherein the training data of the pre-trained parameter extraction model includes: the X face region images labeled with N key points, X face region images projected by N key points, Y sets of general three-dimensional face standard model parameters, one or more Y sheets of the face image and Y face images marked with N key points.

10. The method of claim 8 or 9, wherein the pre-trained parameter extraction model is trained by:

inputting training data into the pre-trained parameter extraction model; and

calculating a loss value, wherein training of the pre-trained parameter extraction model is completed when the loss value between the data is less than a second loss threshold process.

11. The method of any of claim 1-10, wherein before the displaying the three-dimensional face model of the second user, the method comprises one of the following:

detecting that a screen status of the first terminal is on, and storing a three-dimensional face model of the second user on the first terminal; or detecting that the screen status of the first terminal is on, storing the three-dimensional face model of the second user on the first terminal, displaying a three-dimensional call mode selection interface, and detecting a user's selecting a three-dimensional call mode start command on the three-dimensional call mode selection interface; or detecting that a distance between the first terminal and the first user is greater than a preset distance threshold, storing the three-dimensional face model of the second user on the first terminal, displaying the three-dimensional call mode selection interface, and detecting a three-dimensional call mode start instruction entered by the user through the three-dimensional call mode selection interface.

12. The method of claim 11, wherein, after driving the three-dimensional face model of the second user according to the model-driven parameters, the method comprises:

when a three-dimensional call mode exit command is detected, terminating displaying the three-dimensional face model of the second user and/or terminating determining the model-driven parameters based on the voice of the second user; and terminating determining the model-driven parameter based on the voice of the second user if it is detected that the distance between the first terminal and the first user is less than the distance threshold.

13. A call control device, applied to a first terminal, the device includes a processing unit and a communication unit, wherein: the processing unit is configured to display a three-dimensional face model of the second user during a voice call between the first user of the first terminal and the second user of the second terminal through the communication unit; and used to determine model driving parameters according to the call voice of the second user, the model driving parameters including expression parameters and posture parameters; and used to drive a three-dimensional face model of the second user according to the model driving parameters, and display the three-dimensional simulated call animation of the second user, and the three-dimensional simulated call animation presents expression animation information corresponding to the expression parameters, and presents posture animation information corresponding to the posture parameters.

14. The device of claim 13, wherein the displaying the three-dimensional face model of the second user comprises:
displaying the three-dimensional face model of the second user on the call application interface of the first terminal.

15. The device of claim 13, wherein the displaying the three-dimensional face model of the second user comprises:
displaying the three-dimensional face model of the second user on a third terminal connected to the first terminal.

16. The device of claim 13, wherein the displaying the three-dimensional face model of the second user comprises:
displaying the three-dimensional face model of the second user on a third terminal connected to the first terminal.

17. The device of any of claims 13-16, wherein determining model-driven parameters according to the call voice of the second user comprises:

detecting the call voice of the second user, and processing the call voice to obtain the spectrogram of the second user; and inputting the spectrogram of the second user into a driven parameter generation model to generate the model-driven parameters.

18. The device of claim 17, further comprising: obtaining training data of the driven parameter generation model by:

collecting M pieces of audio, and obtaining M spectrograms according to the M pieces of audio, wherein each of the M pieces of audio is read from multiple text libraries in a preset manner, M is a positive integer; collecting three-dimensional face data of each of M collection objects according to a preset frequency to obtain M groups of three-dimensional face data; using a three-dimensional face standard model as a template to align the M groups of three-dimensional face data to obtain M sets of aligned three-dimensional face data, the M groups of aligned three-dimensional face data and the three-dimensional face standard model having same vertices and a same topological structure; and performing time alignment calibration on the M pieces of audio and the M sets of aligned three-dimensional face data, wherein, after the time alignment calibration, each set of three-dimensional face data in the M sets of three-dimensional face data corresponds to the M pieces of audio in a time series,

wherein training data of the driven parameter generation model includes the M sets of aligned three-dimensional face data and the M spectrograms.

19. The device of claim 18, further comprising: training the driven parameter generation model with the training data, wherein training the driven parameter generation model with the training data includes:

inputting the M spectrograms into a driven parameter generation model to generate a first model-driven parameter set;

fitting and optimizing the M sets of aligned three-dimensional face data with the three-dimensional face standard model to generate a second model-driven parameter set;

correlating the parameters in the first parameter set with the parameters in the second parameter set to form a correspondence; and

calculating a loss function to obtain a loss function value,

wherein when the loss function value is less than a preset first loss threshold, the training of the driven parameter generation model is completed.

20. The device of any of claims 13-19, wherein the display of the second user is during a voice call between the first user of the first terminal and the second user of the second terminal;

wherein before the three-dimensional face model of the second user is displayed, the method further comprises:

obtaining a face image of the second user; inputting the face image of the second user into a pre-trained parameter extraction model to obtain identity parameters of the second user;

inputting the identity parameters of the second user into a three-dimensional face standard model to obtain a three-dimensional face model of the second user;

storing the three-dimensional face model of the second user.

21. The device of claim 20, further comprising collecting training data for the parameter extraction model, including:

obtaining X face region images, and labeling each face region image of the X face region images with N key points to obtain X face region images marked with N key points, X, N is positive integer;

inputting the X face region images marked with N key points into a primary parameter extraction model to generate X sets of parameters, inputting the X sets of parameters into the three-dimensional face standard model, and generating X three-dimensional face standard models, performing N key point projections on the X three-dimensional face standard models to obtain X face region images projected by N key points;

collecting Y groups of three-dimensional face scan data, smoothing the Y groups of three-dimensional face scan data, use the three-dimensional face standard model as a template, align the Y groups of three-dimensional face scan data, fitting and optimizing the Y groups of three-dimensional face scan data with the general three-dimensional standard model of the face to obtain the Y groups of general three-dimensional face standard model parameters, the parameters include one of the identity parameters, expression parameters, and posture parameters, the Y groups of three-dimensional face scan data corresponds to Y collection objects, and collecting the face images of each of the Y collection objects to obtain Y face images;

performing N key point annotations on the Y face images to obtain Y face images marked with N key points;

wherein the training data of the pre-trained parameter extraction model includes: the X face region images labeled with N key points, X face region images projected by N key points, Y sets of general three-dimensional face standard model parameters, one or more Y sheets of the face image and Y face images marked with N key points.

22. The device of claim 20 or 21, wherein the pre-trained parameter extraction model is trained by:

inputting training data into the pre-trained parameter extraction model; and

calculating a loss value, wherein training of the pre-trained parameter extraction model is completed when the loss value between the data is less than a second loss threshold process.

23. The device of any of claims 13-22, wherein before the displaying the three-dimensional face model of the second user, the method comprises one of the following:

detecting that a screen status of the first terminal is on, and storing a three-dimensional face model of the second user on the first terminal; or detecting that the screen status of the first terminal is on, storing the three-dimensional face model of the second user on the first terminal, displaying a three-dimensional call mode selection interface, and detecting a user's selecting a three-dimensional call mode start command on the three-dimensional call mode selection interface; or

detecting that a distance between the first terminal and the first user is greater than a preset distance threshold, storing the three-dimensional face model of the second user on the first terminal, displaying the three-dimensional call mode selection interface, and detecting a three-dimensional call mode start instruction entered by the user through the three-dimensional call mode selection interface.

24. The device of claim 23, wherein, after driving the three-dimensional face model of the second user according to the model-driven parameters, the method comprises:

when a three-dimensional call mode exit command is detected, terminating displaying the three-dimensional face model of the second user and/or terminating determining the model-driven parameters based on the voice of the second user; and

terminating determining the model-driven parameter based on the voice of the second user if it is detected that the distance between the first terminal and the first user is less than the distance threshold.

25. A first terminal, comprising:

at least one processor; and
a memory coupled with the at least one processor and configured to store instructions which, when executed by the at least one processor, are operable by the processor to execute instructions in any of claims 1-12.

26. A non-transitory computer readable medium, storing a computer program for electronic data exchange, the computer program causes a terminal to execute instructions in any of claims 1-12.

internet

first
terminal

second
terminal

FIG. 1

during a voice call between a first user of the first terminal and a second user of a second terminal, displaying a three-dimensional face model of the second user `201`

determining model driving parameters according to the call voice of the second user, wherein the model driving parameters include expression parameters and posture parameters `202`

driving the three-dimensional face model of the second user according to the model driving parameters to display a three-dimensional simulated call animation of the second user `203`

FIG. 2A

Jack

13423000000  Shenzhen
GUANGDONG

FIG. 2B

FIG. 2C

FIG. 2D

Jack

13423000000   shenzhen GUANGDONG

regular
call

3D call

FIG. 2E

during a voice call between a first user of the first terminal and a second user of a second terminal, displaying a three-dimensional face model of the second user — 301

detecting the call voice of the second user, processing the call voice, and obtaining the spectrogram of the second user — 302

inputting the second user's spectrogram into a driving parameter generation model, and generating model driving parameters, wherein the model driving parameters include expression parameters, and/or posture parameters — 303

driving the three-dimensional face model of the second user according to the model driving parameters to display a three-dimensional simulated call animation of the second user — 304

FIG. 3

400

Call control method and device

Processing unit — 410

communication unit — 420

storage unit — 430

FIG. 4

first terminal 500

Processor
510

Communicat
ion Interface
530

Memory 520

One or more programs 521

FIG. 5

| INTERNATIONAL SEARCH REPORT | International application No. |
| | **PCT/CN2020/123910** |

**A. CLASSIFICATION OF SUBJECT MATTER**

H04M 1/725(2021.01)i

According to International Patent Classification (IPC) or to both national classification and IPC

**B. FIELDS SEARCHED**

Minimum documentation searched (classification system followed by classification symbols)

H04M; H04L

Documentation searched other than minimum documentation to the extent that such documents are included in the fields searched

Electronic data base consulted during the international search (name of data base and, where practicable, search terms used)

CNPAT, CNKI, EPODOC, WPI: 三维, 人脸, 模型, 语音, 通话, 表情, 心情, 姿态, 形态, 动画, 语谱图, 3D, face, model, voice, speech, sound, call, communication, talk, expression, gesture

**C. DOCUMENTS CONSIDERED TO BE RELEVANT**

| Category* | Citation of document, with indication, where appropriate, of the relevant passages | Relevant to claim No. |
|---|---|---|
| PX | CN 110809090 A (GUANGDONG OPPO MOBILE TELECOMMUNICATIONS CORP., LTD.) 18 February 2020 (2020-02-18) claims 1-15 | 1-26 |
| X | CN 104935860 A (BEIJING SAMSUNG TELECOM R&D CENTER et al.) 23 September 2015 (2015-09-23) description, paragraphs [0002]-[0011], [0061]-[0126], [0227]-[0313], figures 1-11 | 1-26 |
| A | WO 2018108013 A1 (ZTE CORPORATION) 21 June 2018 (2018-06-21) entire document | 1-26 |
| A | CN 101789990 A (YULONG COMPUTER TELECOMMUNICATION SCIENTIFIC (SHENZHEN) CO., LTD.) 28 July 2010 (2010-07-28) entire document | 1-26 |
| A | CN 103279970 A (UNIVERSITY OF SCIENCE AND TECHNOLOGY OF CHINA) 04 September 2013 (2013-09-04) entire document | 1-26 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 January 2021** | **27 January 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/123910** |

| Patent document cited in search report | | | Publication date (day/month/year) | Patent family member(s) | | | Publication date (day/month/year) |
| --- | --- | --- | --- | --- | --- | --- | --- |
| CN | 110809090 | A | 18 February 2020 | None | | | |
| CN | 104935860 | A | 23 September 2015 | None | | | |
| WO | 2018108013 | A1 | 21 June 2018 | CN | 108234735 | A | 29 June 2018 |
| CN | 101789990 | A | 28 July 2010 | None | | | |
| CN | 103279970 | A | 04 September 2013 | None | | | |

Form PCT/ISA/210 (patent family annex) (January 2015)